# EUROPÄISCHE PATENTSCHRIFT

(11) **EP 0 654 591 B1**
(45) Veröffentlichungstag und Bekanntmachung des Hinweises auf die Patenterteilung: **07.10.1998**
(21) Anmeldenummer: 94890190.5
(22) Anmeldetag: 11.11.1994
(51) Int. Cl.: F02C 3/28

(54) **Anlage zur Gewinnung elektrischer Energie aus Brennstoffen, insbesondere aus biogenen Brennstoffen**
Obtension of electrical energy from fuels, especially biofuels
Obtention d'énergie électrique à partir de combustibles, particulièrement biocombustibles

(30) Priorität: 12.11.1993 AT 2300/93
(43) Veröffentlichungstag der Anmeldung: 24.05.1995
(73) Patentinhaber: Schaller, Werner, Dipl.-Ing., A-8043 Graz (AT)
(72) Erfinder: Schaller, Werner, Dipl.-Ing., A-8043 Graz (AT)
(74) Vertreter: Müllner, Erwin, Dr.

(56) Entgegenhaltungen:
- WO-A-81/02303
- DE-A- 2 437 782
- GB-A- 805 786
- GB-A- 952 814
- US-A- 4 638 629
- US-A- 4 677 829
- VGB KRAFTWERKSTECHNIK, Bd.74, Nr.7, Juli 1994, ESSEN DE, XP457120 B.GERICKE 'Biomassenverstromung durch Vergasung und integrierte Gasturbinenprozesse.'

## Beschreibung

Die vorliegende Erfindung betrifft eine Anlage zur Gewinnung elektrischer Energie aus Brennstoffen, insbesondere aus biogenen Brennstoffen, mit einer Brennkammer, Einrichtungen zum Ansaugen und Verdichten von Luft aus der Umgebung und einer Nutzturbine mit angeschlossenem Generator, wobei die Einrichtungen zum Ansaugen und Verdichten von Luft zumindest zwei in Serie geschaltete Verdichter aufweisen, zwischen denen ein Wasserzerstäuber und/oder ein Wärmetauscher vorgesehen sind und wobei die Verdichter jeweils Teil eines Turboladers sind.

Wie beispielsweise aus der DE-OS 35 26 453 bekannt ist, kann durch die Verbrennung biogener Brennstoffe Umgebungsluft erhitzt und weiter dazu benützt werden, eine Nutzturbine mit angeschlossenem Generator zur Erzeugung von elektrischer Energie zu betreiben.

Die Biomasse fällt dezentral an und hat eine im Vergleich zu fossilen Brennstoffen geringe Energiedichte von nur ca. 0,50 - 50 MJ pro m² und Jahr. Dazu kommt, daß der Energiegehlat je Volumseinheit nur etwa 1/10 des Wertes von Steinkohle und nur etwa 1/20 des Wertes von Öl beträgt. Dies bedeutet, daß die Transportkosten den Preis der Biomasse je Energieeinheit stark belasten, sodaß - von Ausnahmefällen abgesehen - Biomasseanlagen wesentlich kleiner sind als fossilbefeuerte Kraftwerke.

Kleinere Kraftwerke haben bei gleicher Ausstattung höhere Kosten je Leistungseinheit als größere. Da bei der stöchiometrischen Verbrennung von Biomasse je Energieeinheit mehr Rauchgas anfällt als bei fossilen Brennstoffen und aufgrund der Konsistenz der Biomasse ein höherer Luftüberschuß benötigt wird als bei fossilen Brennstoffen, wird der Kessel bei gleicher Brennstoffwärmeleistung voluminöser und damit teurer als ein fossilbefeuerter Kessel.

Durch den höheren Luftüberschuß, aber auch durch das Schmelzverhalten der Asche von Biomasse sind die Feuerraumtemperaturen niedriger als bei fossilbefeuerten Anlagen, sodaß wegen der geringeren Temperaturdifferenzen zwischen Rauchgas und Arbeitsmedium die Heizflachen größer und daher teuer sind.

Das im Vergleich zu fossilen Brennstoffen schwierige Handling verursacht nicht nur zusätzliche Kosten, sondern auch einen höheren spezifischen Eigenbedarf an mechanischer Energie als fossilbefeuerte Anlagen.

Das höhere Abgasvolumen ist Ursache für den hohen Abgasund Isolationsverlust sowie eine höhere Gebläseleistung, sodaß die Kesselwirkungsgrade von Biomasseanlagen schlechter sind als jene von fossilbefeuerten Kesseln.

Kleine Dampfturbinen haben aus Fertigungsgründen bei gleichem Dampfdruck und gleicher Dampftemperatur größere Spalt- und Reibungsverluste und aus rein physikalischen Gründen größere Isolations- und mechanische Verluste als größere Dampfturbinen. Senkt man den Dampfdruck und die -temperatur, so senkt man wohl diese oben angegebenen Verluste, verschlechtert aber im Gegenzug den Wirkungsgrad des Kreisprozesses. Das bedeutet, daß für ein vorgegebenes Energieumwandlungssystem definierter Größe ganz bestimmte Dampfparameter einen optimalen Gesamtwirkungsgrad ergeben. Dieser Gesamtwirkungsgrad nimmt jedoch mit der Kraftwerksleistung ab.

Aus den oben genannten Gründen versagt die bei fossilen Großkraftwerken bestens bewährte Technologie der Damptkraftwerke bei kleinen, dezentralen und insbesondere mit Biomasse befeuerten Anlagen wirtschaftlich. Aus diesem Grund bietet sich für Kleinanlagen, die zur Gewinnung von elektrischer Energie aus biogenen Brennstoffen geeignet sein sollen, die Verwendung von Luft als Arbeitsmedium an (siehe die oben bereits erwähnte DE-OS 35 26 453).

Um bei kleinen thermischen Anlagen, insbesondere jenen, die mit Biomasse befeuert werden, zu betriebswirtschaftlich sinnvollen und im Markt konkurrenzfähigen Lösungen zu kommen, muß zur Stärkung der Ertragsseite die Anlage möglichst viele am Markt ertragreich absetzbare Nutzprodukte erzeugen.

Die mechanische bzw. elaktrische Energie soll daher nahe beim Verbraucher in das Mittel- bzw. Niederspannungsnetz eingespeist werden und/oder zur Deckung des Strombedarfes des Produzenten dienen, wodurch der Ertrag aus der Stromproduktion steigt.

Die Nutzwärme kann zur Deckung des Raumwärmebedarfs und/oder als Prozeßwärme der Guterproduktion zugeführt werden. Dieses Ziel wird mit der Kraft-Wärme-Kupplung erreicht.

Zusammenfassend kann also gesagt werden, daß Anlagen zur Erzeugung von elektrischer Energie aus Biomasse im Bereich 2-5 MW elektrisch zwar volkwirtschaftlich zunehmend gefordert werden, daß jedoch beim gegenwärtigen Stand der Technik eine wirtschaftliche Lösung noch nicht verfügbar ist. Eine Anlage der eingangs genannten Art ist aus der GB-A-952 814 bekannt. Diese Anlage ist für die Verbrennung von Torf bestimmt.Das Rauchgas das bei der Verbrennung entsteht, treibt direkt die Nutzturbine bzw. die Turbinen des Turboladers an.

Bei der Verbrennung von Biomasse ist dies technisch problematisch, weil die Reinigung des Rauchgases (bzw. der vergasten Biomasse vor der Verbrennung) in einem derart guten Ausmaß, daß Korrosion der Turbinen verhindert wird, mit vertretbarem Aufwand kaum möglich ist.

Es ist Aufgabe der vorliegenden Erfindung, eine Anlage der eingangs angegebenen Art so zu verbessern, daß die energetische Nutzung von Biomasse für Anlagengrößen von 2-5 MW elektrisch in wirtschaftlich tragbarer Weise möglich ist; insbesondere soll der elektrische Wirkungsgrad hoch sein. Diese Aufgabe wird erfindungsgemäß dadurch gelöst, daß die Anlage einen ersten und einen zweiten, von der Brennkammer jeweils räumlich getrennten Rauchgas-Luft-Wärmetauscher aufweist, wobei in beiden Ranchgas-Luft-Wärmetauschern die von den Verdichtern angesauge Luft durch das in der Brennkammer erzeugte Rauchgas erhitzt wird, daß die Nutzturbine und die Turbinen der Turbolader von der erhitzten Luft antreibbar sind, daß beim ersten Rauchgas-Luft-Wärmetauscher die Strömungsrichtung der Luft entgegengesetzt zur Strömungsrichtung des Rauchgases gerichtet ist, wogegen beim zweiten Rauchgas-Luft-Wärmetauscher die Strömungsrichtung der Luft und die Strömungsrichtung des Rauchgases gleich gerichtet sind, daß der erste Rauchgas-Luft-Wärmetauscher, in Strömungsrichtung der Luft gesehen, vor dem zweiten Rauchgas-Luft-Wärmetauscherliegt, daß der erste Rauchgas-Luft-Wärmetauscher, in Strömungsrichtung des Rauchgases gesehen, hinter dem zweiten Rauchgas-Luft-Wärmetauscher liegt und daß der zweite Rauchgas-Luft-Wärmetauscher zwischen der Turbine eines Turboladers und der Nutzturbine oder zwischen den Turbinen zweier Turbolader geschaltet ist.

Die räumliche Trennung von Brennkammer und Rauchgas-Luft-Wärmetauscher ermöglicht es, die Verbrennung einerseits und den Wärmetalisch Rauchgas-Luft anderseits unabhängig voneinander den jeweiligen Erfordernissen entsprechend durchführen zu können und beide Verfahrensschritte ohne Einschränkungen optimal anpassen zu können. Bei der Konstruktion der Verbrennungseinheit beispielsweise kann etwa die Beeinflussung der Rauchgastemperatur durch die Temperatur der zugeführten Primär- und Sekundärverbrennungsluft bzw. durch die über die Rost- und Verbrennungsraumkühlung abgeführte Wärmemenge berücksichtigt werden, ohne daß dies direkten Einfluß auf den Wärmeaustausch zwischen Rauchgas und der Luft als Arbeitsmedium, also letztlich auch auf die Konstruktion des Wärmetauschers, hat. Sowohl die Brennkammer als auch der Rauchgas-Luft-Wärmetauscher können unabhängig voneinander in der jeweils optimalen Weisen ausgelegt werden. Beispielsweise kann durch die spezielle Auslegung des Rauch-gas-Luft-Wärmetauschers darin die Anströmung der Wärmetauscherflächen und damit deren Korrosionsanfälligkeit beeinflußt werden, ohne daß dabei auf Besonderheiten der Verbrennungseinheit Rücksicht genommen werden müßte. Durch Einhalten einer Mindesttemperatur im Verbrennungsraum kann die Asche verflüssigt und in dieser Form abgezogen werden, so- daß keine Verschmutzung der Wärmetauscherflächen erfolgt. Ein weiterer vorteil besteht darin, daß es möglich ist, heiße Verbrennungsluft erst über dem Brenner zuzuführen, und unterhalb des Brenners lediglich kalte Verbrennungsluft zu-zuführen. Dadurch wird der Brenner thermisch weniger belastet und kann aus entsprechend günstigeren Materialien gefertigt sein.

Die biogenen Brennstoffe enthalten auch unerwünschte Stoffe wie Schwefel, Halogene und Alkali- bzw. Erdalkalimetalle. Diese verbinden sich bei der Verbrennung von Biomasse und können, insbesondere bei hohen Wandtemperaturen, einen starken Korrosionsangriff bewirken, z.B. Chlorkorrosion und "Hot Corrosion" durch Alkalisulfate. Erfindungsgemäß kann nun durch spezielle Auslegung der Anströmung der Wärmetauscherflächen deren Korrosionsanfälligkeit beeinflußt werden, ohne daß dabei auf Bedingungen bei der Verbrennunq Rücksicht genommen werden muß, wie dies bei den Verbrennungsraum direkt umgebenden Lufterhitzern der Fall wäre.

Um zu verhindern, daß allzu hitzefeste und damit allzu teure Rohre verwendet werden müssen, sind zwei Rauchgas-Luft-Wärmetauscher vorgesehen; die heißesten Rauchgase treffen zunächst auf den zweiten Rauchgas-Luft-Wärmetauscher, wo die Luft im Gleichstrom zum Rauchgas strömt; daher treffen die heißesten Rauchgase auf relativ kühle Luft, sodaß die Rohre des Wärmetauschers nicht allzusehr thermisch belastet werden. Es ergibt sich eine relativ gleichmäßige Belastung über die gesamte Länge des zweiten Rauchgas-Luft-Wärmetauschers. Deshalb sind mit gleicher Materialqualität höhere Temperaturen erzielbar, wodurch der Wirkungsgrad und die Leistung steigt bzw. die Kosten sinken. Im ersten Rauchgas-Luft-Wärmetauscher strömt die Luft - wie üblich - im Gegenstrom zum Rauchgas; dort ist aber das Rauchgas durch den zweiten Rauchgas-Luft-Wärmetauscher bereits abgekühlt; die thermische Belastung ist daher auch in diesem Rauchgas-Luft-Wärmetauscher nicht allzu groß. Wärmetauscher, die allzu großen thermischen Belastungen Standhalten können, sind so teuer, daß sie für Kleinanlagen zu einem nicht vertretbaren Investitionsaufwand führen.

Dadurch, daß der zweite Rauchgas-Luft-Wärmetauscher zwischen der Turbine eines Turboladers und der Nutzturbine oder zwischen den Turbinen zweier Turbolader geschaltet ist, wird die im ersten Rauchgas-Luft-Wärmetauscher erhitzte Luft zunächst in einer Turbine des Turboladers oder in der Nutzturbine entspannt und abgekühlt und dann im zweiten Rauchgas-Luft-Wärmetauscher neuerlich erhitzt; die neuerlich erhitzte Luft wird dann zu einer anderen Turbine geführt. Dadurch wird der Prozeß dem idealen Carnot-Prozeß ähnlicher, was den Wirkungsgrad erhöht. Außerdem werden Temperaturschwankungen bei der Verbrennung der Biomasse gedämpft an die Turbinen weitergegeben; sie können gegebenenfalls durch einen nachgeschalteten Kanalbrenner ausgeglichen werden.

Bei der erfindungsgemäßen Anlage sind zumindest zwei Verdichter vorgesehen. Die Außenluft wird zunächst durch den ersten Verdichter komprimiert und dabei - durch Zufuhr mechanischer Arbeit - erwärmt. Danach wird ein Teil der Wärme über einen Wärmetauscher entnommen; diese Wärme kann natürlich nutzbringend - z.B. für die Fernwärme - verwendet werden. Dadurch wrid die Luft abgekühlt. Alternativ dazu kann die Abkühlung der Luft auch durch Einspritzen von Wasser erfolgen. Infolge der für das Verdampfen des Wassers notwendigen Verdampfungswärme kühlt die Luft ab und wird feuchter. Obwohl nun im nächsten Verdichter mehr Masse verdichtet werden muß als ohne Einspritzung, ist wegen der starken Temperatursenkung eine geringere Verdichterleistung notwendig, als dies ohne Abkühlung erforderlich wäre.

Besonders zweckmäßig ist es natürlich, wenn zwischen den beiden Verdichtern sowohl ein Wasserzerstäuber als auch ein Wärmetauscher vorgesehen sind, wobei der Wärmetauscher - in Strömungsrichtung der Luft gesehen - vor dem Wasserzerstäuber liegt. Würde man den Wärmetauscher hinter dem Wasserzerstäuber anordnen, so bestunde die Gefahr, daß das eingespritze Wasser am Wärmetauscher kondensiert, was einerseits dem Wärmetauscher schadet und anderseits eine Verringerung der Luftfeuchtigkeit zur Folge hat. Durch die Wärmentnahme im Wärmetauscher und die Wasseinspritzung kann die Temperatur der Luft bis maximal auf die Sättigungstemperatur gesenkt werden.

Es ist selbstverständlich möglich, auch mehr als zwei in Serie geschaltete Verdichter vorzusehen. In diesem Fall können dann zwischen jeweils zwei aufeinanderfolgenden Verdichtern ein Wasserzerstäuber und/oder ein Wärmetauscher vorgesehen sein. Zusätzlich kann auch - in Strömungsrichtung der Luft gesehen - nach dem letzten Verdichter ein Wasserzerstäuber und/oder ein Wärmetauscher vorgesehen sein.

Dadurch ergibt sich im Endeffekt eine beinahe isotherme Verdichtung der Luft, was die notwendige Verdichterleistung und damit den mechanischen Eigenbedarf der Anlage stark reduziert. Durch das Anfeuchten der Luft wird die spezifische Wärmekapazität der Luft erhöht und der Wärmeübergang infolge Konvektion und Gasstrahlung verbessert, wodurch im Rauchgas-Luft-Wärmetauscher mit kleineren Heizflächen ausgekommen werden kann. Zusätzlich werden die Temperaturverhältnisse am Rauchgas-Luft-Wärmetauscher besser, was eine weitere Verringerung der Heizflächen ermöglicht. Durch die Wassereinspritzung wird der Massestrom erhöht, was eine Erhöhung der Leistung der Turbinen mit sich bringt. Dadurch wird der mechanische und elektrische Wirkungsgrad der Anlage vergrößert. Schließlich ist noch zu erwähnen, daß durch Wärmetauscher und Wassereinspritzung die Temperatur nach dem Letzten Verdichter praktisch unabhängig von der Außentemperatur ist, sodaß die Anlage in diesem Sinne selbstregelnd wirkt. Dies ist speziell bei Kleinanlaqen von Vorteil, weil die Kosten der Steuerung und der Regelung bei Kleinanlagen einen relativ hohen Anteil an den Gesamtkosten haben.

Bezüglich des elektrischen Wirkungsgrades ist es natürlich günstig, wenn die Luft möglichst hoch erhitzt wird. Anderseits steigen die Investitionskosten für die Anlage enorm an, wenn im Rauchgas-Luft-Wärmetauscher die Luft sehr hoch erhitzt werden soll, weil dann sehr hitzefeste und damit sehr teure Rohre verwendet werden müssen. Um nun einen hohen elektrischen Wirkungsgrad bei niedrigen Investitionskosten zu erzielen, ist nach einem weiteren Merkmal der Erfindung vorgesehen, daß - in Strömungsrichtung der Luft gesehen - vor der Nutzturbine ein Kanalbrenner, vorzugsweise ein Öl- oder Gaskanalbrenner, vorgesehen ist. Auf diese Weise ist teueres Material nur für das Rohr vom Kanal brenner bis zur Turbine notwendig. Diese Maßnahme hat weiters den Vorteil, daß die Regelgeschwindigkeit zur Leistungsänderung der Anlage wesentlich erhöht wird, weil über den Kanalbrenner eine wesentlich raschere Änderung der Lufttemperatur erzielt werden kann als über den Rauchgas-Luft-Wärmetauscher. Wie bereits erwähnt, ist besonders bei kleinen Anlagen von hoher wirtschaftlichere Bedeutung, daß sie sich auf einfache Weise rasch regeln lassen.

Bei der erfindungsgemäßen Anlage sind die Verdichter jeweils Teil eines Turboladers, wobei die Nutzturbine und die Turbinen der Turbolader von der im Rauchgas-Luft-Wärmetauscher erhitzten Luft antreibbar sind. Auf diese Weise wird zum Ansaugen und Verdichten der Luft die Wärmeenergie der im Rauchgas-Luft-Wärmetauscher erhitzten Luft ausgenützt. Außerdem stehen mit Schiffturboladern ausgereifte und der Praxis bestens bewährte Komponenten mit hohem Wirkungsgrad in großer Stückzahl zur Verfügung, welche oft bis 8000 Stunden pro Jahr jahrzehntelang im Einsatz sind.

Vorzugsweise ist auch vor der Turbine mindestens eines Turboladers ein Kanalbrenner, vorzugsweise ein Öl- oder Gaskanalbrenner, vorgesehen. Dadurch ergeben sich ähnliche Vorteile, wie sie weiter oben bezüglich des Kanalbrenners vor der Nutzturbine beschrieben sind.

Zur Erzielung des besten elektrischen Wirkungsgrades ist es zweckmäßig, einen Niederdruck-Turbolader und einen Hochdruck-Turbolader vorzugsehen, wobei die beiden Turbolader sowohl auf der Verdichterseite als auch auf der Turbinenseite in Serie geschaltet sind; dabei ist die Verdichterseite des Hochdruck-Turboladers an den ersten RauchgasLuft-Wärmetauscher angeschlossen, wobei dieser erste Rauchgas-Luft-Wärmetauscher anderseits an die Nutzturbine angeschlossen ist, die wiederum mit der Turbine des Hochdruck-Turboladers in Verbindung steht; und der zweite Rauchgas-Luft-Wärmetauscher ist zwischen den Turbinen der beiden Turbolader geschaltet. Diese Anordnung ist auch aufgrund der günstigen Lösungsmöglichkeiten für interstationäre Betriebszustände wie Anfahren, Abstellen und Lastabwurf günstig. Mit einer derartigen Anlage kann ein dreistufiger, indirekt beheizter Heißluftprozeß ausgeführt werden. Wenn man mit hilfe der Wasserzerstauber eine Verdampfungs-Zwischenkühlung und mit Hilfe der Kanalbrenner eine Zwischenerhitzung durchführt, wird die Energieausbeute bei begrenzter Bauteilebeanspruchtung über 30 % hinaus gesteigert.

Eine Anlage mit ähnlich guten Eigenschaften wird erhalten, wenn die Turbine des Hochdruck-Turboladers und die Nutzturbine parallel geschaltet sind; eine derartige Anlage ist daher dadurch gekennzeichnet, daß ein Niederdruck-Turbolader und ein Hochdruck-Turbolader vorgesehen sind, wobei die beiden Turbolader sowohl auf der Verdichterseite als auch auf der Turbinenseite in Serie geschaltet sind, daß die Verdichterseite des Hochdruck-Turboladers an den ersten Rauchgas-Luft-Wärmetauscher angeschossen ist, daß dieser erste Rauchgas-Luft-Wärmetauscher anderseits sowohl an die Nutzturbine als auch an die Turbine des Hochdruck-Turboladers angeschlossen ist und daß der zweite Rauchgas-Luft-Wärmetauscher zwischen der Nutzturbine und der Turbine des Hochdruck-Turboladers einerseits und der Turbine des Niederdruck-Turboladers anderseits geschaltet ist.

Um einen möglichst guten Wirkungsgrad der Anlage zu erzielen, ist es zweckmäßig, die in der Luft nach der Nutzturbine bzw. den Turbinen der Turbolader noch enthaltene Wärmeenergie zu nutzen; es ist daher zweckmäßig, daß eine vorzugsweise mit einer steuerbaren Ventilanordnung versehenen Leitung für die in der Nutzturbine bzw. in den Turbinen der Turbolader abgekühlte Luft zur Brennkammer vorgesehen ist. Die über die Turbine geleitete, dabei entspannte und abgekühlte Luft kann dadurch zumindest zum Teil der Brennkammer zugeführt werden, wo sie als vorgewärmte Verbrennungsluft dient. Diese Maßnahme hat auch den Vorteil, daß infolge der Wassereinspritzung der Verbrennungsluft Dampf zugeführt wird, was eine Verringerung der primär erzeugten Stickoxide zur Folge hat.

Es ist natürlich auch sinnvoll, die Restwärme des Rauchgases nach dem Rauchgas-Luft-Wärmetauscher zu nützen; zu diesem Zweck kann man nach dem Rauchgas-Luft-Wärmetauscher einen weiteren Wärmetauscher für das Rauchgas, z.B. einen Rauchgas-Wasser-Wärmetauscher und/oder einen weiteren Rauchgas-Luft-Wärmetauscher vorsehen. Mit einem Rauchgas-Wasser-Wärmetauscher könnte z.B. Wasser für das Fernwärmenetz erhitzt werden; mit einem weiteren Rauchgas-Luft-Wärmetauscher könnte z.B. Luft für die Holztrocknung erwärmt werden. Solch ein Wärmetauscher hätte den besonderen Vorteil, daß dadurch das Rauchgas besonders stark abgekühlt wird. Dies ist nicht nur energetisch günstig, sondern es bewirkt auch, daß aus dem Rauchgas relativ viel Wasser kondensiert wird. Dadurch wird die Wasserdampfkondensation am Ende des Schornsteines, die eine unschöne weiße Wolke nach sich zieht, verringert, und außerdem kann auch die entstehende Kondensationswärme verwertet werden, was den Gesamtwirkungsgrad der Anlage erhöht. Das anfallende Wasser kann für die Wasserzerstäuber verwendet werden, sodaß das Einspritzwasser im Kreis geführt wird und somit kaum Bedarf an Frischwasser besteht. Weiters ist vorteilhaft, daß sich durch die Holztrocknung mit Niedertemperaturwärme die Gasqualität und damit der Wirkungsgrad der Anlage verbessert; außerdem kann im wasserdampfgesättigten Bereich eine allenfalls notwendige Rauchgasreinigung effizient durchgeführt werden.

Die Wasserdampfkondensation am Ende des Schornsteins kann noch weiter verringert werden, wenn nach dem Rauchgas-Luft-Wärmetauscher ein Wärme-Verschiebungssystem für das Rauchgas vorgesehen ist, das aus zwei in Serie geschalteten Gegenstromwärmetauschern besteht, zwischen denen sich der weitere Wärmetauscher bzw. wenigstens einer der weiteren Wärmetauscher für das Rauchgas befinden. Auf diese Weise wird dem Rauchgas vor dem weiteren (oder einem der weiteren) Rauchgas-Luft-Wärmetauscher Wärme entnommen und danach wieder zugeführt. Dadurch wird das Rauchgas wieder erwärmt und damit relativ trocken, sodaß eine Wasserdampffahne am Schornstein verhindert wird.

Schließlich ist es zweckmäßig, wenn zum Verbrennen der Biomasse ein Biomasse-Vergaser mit einem anschließenden Gasbrenner in der Brennkammer vorgesehen ist, wobei zwischen dem Biomasse-Vergaser und dem Gasbrenner ein Staubfilter vorgesehen ist. Die Verwendung eines Biomasse-Vergasers ist gerade bei einer Anlage gemäß der vorliegenden Erfindung günstig, weil die nach den Turbinen abgekühlte, aber immer noch relativ warme Luft für den Biomasse-Vergaser verwendet werden kann. Ein Teil der Luft kann direkt in der Oxidationszone des Biomasse-Vergasers verwendet werden, ein weiterer Teil für die Erzeugung von Wasserdampf für die Reduktionszone; der Rest kann - wie beschrieben - der Brennkammer zugeführt werden.

Normalerweise werden Staubfilter nach der Verbrennung des Brennstoffes angeordnet, im allgemeinen nach Abkühlung des Rauchgases im Rauchgas-Luft-Wärmetauscher. Die Anordnung zwischen dem Vergaser und dem Gasbrenner hat jedoch mehrere Vorteile: Durch die wesentlich kleinere Menge des Brenngases im Vergleich zum Rauchgas erhält man ein kleineres und kostengünstigeres Filter als dies am kalten Ende des Rauchgasstromes möglich ist. Erosionen bzw. Verschlackung oder Verklebung der Rauchgas-Luft-Wärmetauscher wird vermieden, was kleinere Heizflächen mit größerer Lebensdauer ermöglicht. Der Wirkungsgrad nimmt während der Betriebsperiode weniger ab als ohne diese Maßnahme. Die Rohre des Rauchgas-Luft-Wärmetauschers können gerippt werden, wodurch eine weitere Verringerung vor allem bei den teuren Heizflächen möglich ist.

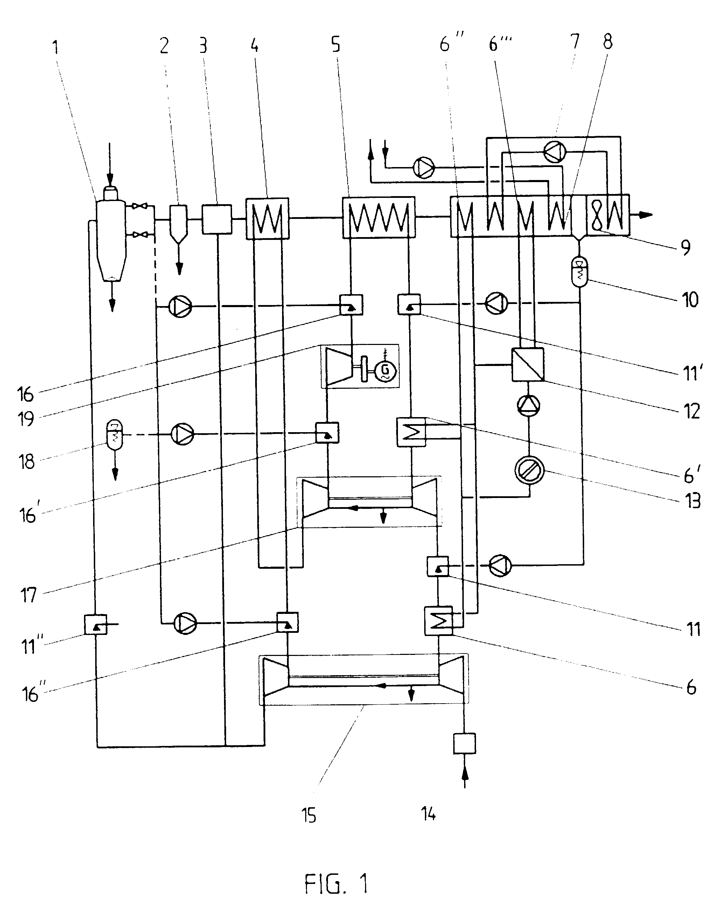

Anhand der beiliegenden Zeichnungen wird die Erfindung näher erläutert, wobei Fig. 1 eine Prinzipdarstellung einer erfindungsgemäßen Anlage zeigt.

Zur Verbrennung der Biomasse ist eine Brennkammer 3 vorgesehen. In dieser Brennkammer 3 kann die Biomasse direkt verbrannt werden; bevorzugt ist jedoch, daß sie zunächst in einem Biomasse-Vergaser 1 vergast wird und daß anschließend das Gas in der Brennkammer 3 verbrannt wird. Der Vorteil des Biomasse-Vergasers 1 liegt u.a. darin, daß in diesem die Restwärme der Prozeßluft dem Prozeß wieder zugeführt werden kann. Auf diese Weise wird ein Gesamtwirkungsgrad erreicht, der höher liegt als bei konventioneller Biomasse-Verbrennung. Außerdem kann ein Staubfilter 2 vor der Brennkammer 3 angeordnet werden, wodurch dieses kleiner und billiger gebaut werden kann als die üblichen Staubfilter hinter der Brennkammer.

Das bei der Verbrennung entstehende Rauchgas wird über mehrere Wärmetauscher geführt. Infolge des Staubfilters 2 verschmutzen die Wärmetauscher kaum. Daher können die Wärmetauscherflächen wesentlich kleiner gehalten werden, was die Gesamtkosten für die Anlage entsprechend reduziert. An Wärmetauschern für das Rauchgas sind vorgesehen: Ein erster 5 und ein zweiter 4 Rauchgas-Luft-Wärmetauscher zur Erwärmung der Prozeßluft; der erste Rauchgas-Luft-Wärmetauscher 5 ist ein Gegenstrom-Wärmetauscher, der zweite Rauchgas-Luft-Wärmetauscher 4 ist ein Gleichstrom-Wärmetauscher. Danach folgen zwei Rauchgas-Wasser-Wärmetauscher 6", 6"', mit denen Wasser für das Fernwärmenetz erhitzt werden kann. Dahinter ist ein weiterer Rauchgas-Luft-Wärmetauscher 8 vorgesehen, mit dem Luft für die Holztrocknung erwärmt werden kann. Um eine Wasserdampffahne zu verhindern, ist ein Wärmeverschiebungssystem 7 vorgesehen. Dieses besteht aus zwei in Serie geschalteten Gegenstromwärmetauschern, in denen ein Wärmetrager durch eine Pumpe im Kreis geführt wird. Da sich zwischen den beiden Gegenstromwärmetauschern der Rauchgas-Wasser-Warmetauscher 6"' und der Rauchgas-Luft-Wärmetauscher 8 befinden, wird das Rauchgas vor diesen Wärmetauschern abgekühlt und danach wieder aufgewärmt, wodurch es wieder über den Taupunkt erwärmt wird.

Nach dem letzten Wärmetauscher (dem weiteren Rauchgas-Luft-Wärmetauscher 8) ist eine Ableitung für das kondensierte Wasser vorgesehen; das entfeuchtete Rauchgas wird über einen Saugzug 9 ins Freie befördert.

Zum Ansaugen und Verdichten von Luft, die als Prozeßgas verwendet wird, dienen zwei Turbolader, nämlich ein Niederdruck-Turbolader 15 und ein Hochdruck-Turbolader 17. Beide Turbolader 15, 17 haben - wie üblich - eine Turbine und einen Verdichter, die antriebsmäßig miteinander verbunden sind. Von der Saugseite des Verdichters des Niederdruck-Turboladers 15 wird über einen Schalldämpfer 14 kalte Umgebungsluft angesaugt. Die Druckseite des Verdichters des Niederdruck-Turboladers 15 steht mit der Saugseite des Verdichters des Hochdruck-Turboladers 17 in Verbindung; die Druckseite dieses Verdichters ist an den Eingang des ersten Rauchgas-Luft-Warmetauschers 5 angeschlossen. Der Ausgang dieses ersten Rauchgas-Luft-Wärmetauschers 5 steht mit der Nutzturbine 19 in Verbindung. Diese Nutzturbine 19 treibt in üblicher Weise einen Generator zur Erzeugung elektrischer Energie an. Der Ausgang der Nutzturbine 19 steht mit dem Eingang der Turbine des Hochdruck-Turboladers 17 in Verbindung; deren Ausgang ist an den Eingang des zweiten Rauchgas-Luft-Wärmetauschers 4 angeschlossen. Der Ausgang dieses zweiten Rauchgas-Luft-Wärmetauschers 4 steht mit dem Eingang der Turbine des Niederdruck-Turboladers 15 in Verbindung. Dessen Ausgang steht mit der Brennkammer 3 bzw. mit dem Biomasse-Vergaser 1 in Verbindung. Vor dem Biomasse-Vergaser 1 kann ein Wasserzerstäuber 11" vorgesehen sein.

Vor der Nutzturbine 19 ist ein Kanalbrenner 16 vorgesehen, und vor den Turbinen des Hochdruck-Turboladers 17 und des Niederdruck-Turboladers 15 sind Kanalbrenner 16' bzw. 16" vorgesehen. Der Kanalbrenner 16' wurde lediglich zur Vollständigkeit eingezeichnet; in der Praxis ist er zumeist entbehrlich. In den Kanalbrennern 16, 16', 16" wird normalerweise Öl aus einem Vorratsbehälter 18 verbrannt; es ist aber auch denkbar, die im Biomasse-Vergaser anfallende flüssige Fraktion oder Biogas zu verbrennen. Die Kanalbrenner 16, 16', 16" müssen eine schadstoffarme Verbrennung bei hohem Luftüberschuß und hohen Temperaturen gewährleisten. Entscheidend ist geringer Druckverlust bei großem Durchsatz. Um eine Schädigung der nachgeschalteten Turbinen zu vermeiden, sollte das Temperaturprofil beim Austritt aus den Brennern möglichst homogen sein. Die Kanalbrenner 16, 16', 16" dienen hauptsächlich zur Steigerung des Wirkungsgrades der Anlage; der vor der Nutzturbine 19 liegende Kanalbrenner 16 hat darüber hinaus noch Regel-, Schutz- und Anfahraufgaben zu übernehmen.

Nach den Verdichtern des Niederdruck-Turboladers 15 und des Hochdruck-Turboladers 17 ist jeweils ein Wasserzerstäuber 11 bzw. 11' vorgesehen. Auch dadurch wird der elektrische Wirkungsgrad wesentlich verbessert. Zweck der Wasserzerstäuber 11 und 11' ist, daß die Luft kühler und feuchter wird. Um dies zu erreichen, muß die Verdampfungsenthalpie möglichst rasch freigesetzt werden. Es soll eine moglichst gleichmäßige Verteilung der Tropfen erzielt werden, und die Tropfen sollen möglichst klein sein.

Zwischen den Wasserzerstäubern 11 und 11' und den Verdichtern kann jeweils ein Luft-Wasser-Wärmetauscher 6 bzw. 6' vorgesehen sein. Mit diesen Wärmetauschern kann Wasser für das Fernwärmenetz erhitzt werden.

Damit über den Fernwärme-Anschluß 13 Heißwasser abgegegeben werden kann, sind - wie erwähnt - mehrere Wärmetauscher vorgesehen. Die Luft-Wasser-Wärmetauscher 6 und 6' sind parallel zueinander geschaltet. Der Rauchgas-Wasser-Wärmetauscher 6"' erwärmt das Wasser über eine Wärmepumpe 12. Dies hat den Vorteil, daß das Wasser im Rauchgas-Wasser-Wärmetauscher 6"' kühler sein kann als das Rücklaufwasser aus dem Fernwärmenetz. Auf diese Weise können die Rauchgase stärken gekühlt werden. Dies ist insofern günstig, als mehr Wasser kondensiert und abgeleitet werden kann. Dies wirkt sich auch in der Energiebilanz günstig aus, weil durch die tiefere Rauchgastemperatur und die geringere Masse die erforderliche Leistung des Saugzuges 9 um mehr als den Leistungsbedarf der Wärmepumpe 12 reduziert wird. Nachdem das Wasser des Fernwärmenetzes über die Wärmepumpe 12 erwärmt wurde, wird es danach im Rauchgas-Wasser-Wärmetauscher 6" weiter erhitzt.

Die erfindungsgemäße Anlage arbeitet wie folgt:

Bei der vorliegenden Erfindung wird Luft aus der Atmosphäre über Schalldämpfer 14 und/oder Luftfilter angesaugt und im Verdichter des Niederdruckturboladers 15 verdichtet. Ein Teil der dabei zugeführten Energie wird über einen Luft-Wasser-Wärmetauscher 6 an das Fernwärmenetz abgegeben, wobei die Temperatur sinkt. Durch eine nachfolgende Wassereinspritzung mittels des Wasserzerstäubers 11 - womöglich bis zur Sättigung - wird die Temperatur weiter abgesenkt.

Im Verdichter des Hochdruck-Turboladers 17 wird die feuchte Luft auf ihren Enddruck verdichtet, wobei anschließend wieder ein Teil der dem Verdichter zugeführten Energie uber eine Luft-Wasser-Wärmetauscher 6' an das Fernwärmenetz abgegeben werden kann, bevor mittels des Wasserzerstäubers 11' die Temperatur - womöglich auf die Sättigungstemperatur - abgesenkt wird.

Im Rauchgas-Luft-Wärmetauscher 5 wird die Hochdruckluft im Gegenstrom erwärmt, bevor sie von einem gas-bzw. ölgefeuerten Kanalbrenner 16 auf die gewünschte Temperatur gebracht wird.

Danach wird ein Teil der in der Luft enthaltenen Energie in mechanische Arbeit umgewandelt. (Genaugenommen handelt es sich hinter dem Kanalbrenner 16 nicht mehr um reine Luft, sondern um ein Luft/Rauchgasgemisch.)

Dies kann je nach Schaltungsvariante entweder parallel in der Nutzleistungsturbine 19 und der Turbine des Hochdruck-Turboladers 17 erfolgen oder in Serie, wobei die Nutzleistungsturbine 19 vor der Turbine des Hochdruckturboladers 17 als auch danach geschaltet werden kann. Das mit niedrigerem Druck bzw. niedrigerer Temperatur austretende Luft/Rauchgasgemisch wird im Hochtemperaturbereich der Rauchgase mittels eines Rauchgas-Luft-Wärmetauschers 4 im Gleichstrom zwischenerhitzt. Das so erhitzte Luft/Rauchgasgemisch kann im gas- bzw. ölgefeuerten Kanalbrenner 16" bedarfsgerecht erwärmt werden, bevor es einen Teil seiner Energie als mechanische Arbeit abgibt. Dies kann je nach Schaltungsvariante entweder an die Turbine des Niederdruck-Turboladers 15 oder an die Nutzturbine 19 und die Turbine des Niederdruck-Turboladers 15, welche wiederum parallel oder in Serie geschaltet sein können, erfolgen.

Nachdem das Luft/Rauchgasgemisch auf den atmosphärischen bzw. einen nahatmosphärischen Druck abgearbeitet wurde, kann es ganz oder teilweise dem Biomasse-Vergaser 1 bzw. der Brennkammer 3 zugeführt werden.

Um eine Verschmutzung der Heizflächen durch Asche tunlichst zu vermeiden, wird das im Biomasse-Vergaser 1 entstehende Brenngas vor Verbrennung in einem Staubfilter 2 gereinigt. Durch die Verbrennung in einer vom Wärmetauscherteil getrennten Brennkammer 3 wird die zum Großteil dem Prozeß zugeführte Wärme zuerst im zweiten 4 und dann im ersten Rauchgas-Luft-Wärmetauscher 5 an das Arbeitsmedium Luft zur Zwischenerhitzung bzw. zur Erhitzung abgegeben. Anschließend wird ein weiterer Teil der vorhandenen Energie über einen Rauchgas-Wasser-Wärmetauscher 6" an das Fernwärmenetz abgegeben. Danach wird über ein Wärmeverschiebungssystem 7 ein Teil der Wärme dem stark wasserhältigen Rauchgas entzogen, um später dem weniger wasserhältigen Rauchgas wieder zugeführt zu werden. Diesem näher am Taupunkt liegenden Rauchgas wird über einen Rauchgas-Wasser-Wärmetauscher 6‴ und einen Rauchgas-Luft-Wärmetauscher 8 soviel Wärme entzogen, daß der Bedarf an Einspritzwasser durch das entstehende Kondenswasser in etwa gedeckt ist. In diesem Temperaturbereich können Addivie zur Schadstoffreduktion der Rauchgase zugeführt werden.

Danach werden die entstehenden bzw. notwendigen Druckverluste von einem Saugzug 9 gedeckt, bevor das Rauchgas mit angemessener bzw. vorgeschriebener Temperatur über den Kamin an die Umgebung abgegeben wird. Die entzogene Niedertemperatur-Wärme kann mit Hilfe einer Wärmepumpe 12 zur Erhöhung der Nutzwärmeproduktion herangezogen werden und/oder einem Wärmeverbraucher bzw. der Brennstofftrocknung zugeführt werden.

## Patentansprüche

1. Anlage zur Gewinnung elektrischer- Energie aus Brennstoffen, insbesondere aus biogenen Brennstoffen, mit einer Brennkammer (3), Einrichtungen zum Ansaugen und Verdichten von Luft aus der Umgebung und einer Nutzturbine (19) mit angeschlossenem Generator, wobei die Einrichtungen zum Ansaugen und Verdichten von Luft zumindest zwei in Serie geschaltete Verdichter aufweisen, zwischen denen ein Wasserzerstäuber (11) und/oder ein Wärmetauscher (6) vorgesehen sind und wobei die Verdichter jeweils Teil eines Turboladers (15, 17) sind, **dadurch gekennzeichnet**, daß die Anlage einen ersten (5) und einen zweiten (4), von der Brennkammer (3) jeweils räumlich getrennten Rauchgas-Luft-Wärmetauscher (4,5) aufweist, wobei in beiden Rauchgas-Luft-Wärmetauschern (5,4) die von den Verdichtern angesauge Luft durch das in der Brennkammer (3) erzeugte Rauchgas erhitzt wird, daß die Nutzturbine (19) und die Turbinen der Turbolader (15,17) von der erhitzten Luft antreibbar sind, daß beim ersten Rauchgas-Luft-Wärmetauscher (5) die Strömungsrichtung der Luft entgegengesetzt zur Strömungsrichtung des Rauchgases gerichtet ist, wogegen beim zweiten RauchgasLuft-Wärmetauscher (4) die Strömungsrichtung der Luft und die Strömungsrichtung des Rauchgases gleich gerichtet sind, daß der erste Rauchgas-Luft-Wärmetauscher (5), in Strömungsrichtung der Luft gesehen, vor dem zweiten Rauchgas-Luft-Wärmetauscher (4)liegt, daß der erste Rauchgas Luft-Wärmetauscher (5), in Strömungsrichtung des Rauchgases gesehen, hinter dem zweiten Rauchgas-Luft-Wär metauscher (4) liegt und daß der zweite Rauchgas Luft-Wärmetauscher (4) zwischen der Turbine eines Turboladers (17, 15) und der Nutzturbine (19) oder zwischen den Turbinen zweier Turbolader (15, 17) geschaltet ist.

2. Anlage nach Anspruch 1, **dadurch gekennzeichnet**, daß zwischen den beiden Verdichtern sowohl ein Wasserzerstäuber (11) als auch ein Wärmetauscher (6) vorgesehen sind, wobei der Wärmetauscher (6) - in Strömungsrichtung der Luft gesehen - vor dem Wasserzerstäuber (11) liegt.

3. Anlage nach Anspruch 1 oder 2, **dadurch gekennzeichnet**, daß auch - in Strömungsrichtung der Luft gesehen - nach dem letzten Verdichter ein Wasserzerstäuber (11') und/oder ein Wärmetaucher (6') vorgesehen ist.

4. Anlage nach einem der Ansprüche 1 bis 3, **dadurch gekennzeichnet**, daß, in Strömungsrichtung der Luft gesehen, vor der Nutzturbine (19) ein Kanalbrenner (16), vorzugsweise ein Öl- oder Gaskanalbrenner, vorgesehen ist.

5. Anlage nach einem der Ansprüche 1 bis 4, **dadurch gekennzeichnet**, daß vor der Turbine zumindest eines Turboladers (15, 17) ein Kanalbrenner (16', 16"), vorzugsweise ein Öl- oder Gaskanalbrenner, vorgesehen ist.

6. Anlage nach einem der Ansprüche 1 bis 5, **dadurch gekennzeichnet**, daß ein Niederdruck-Turbolader (15) und ein Hochdruck-Turbolader (17) vorgesehen sind, wobei die beiden Turbolader (15, 17) sowohl auf der Verdichterseite als auch auf der Turbinenseite in Serie geschaltet sind, daß die Verdichterseite des Hochdruck Turboladers (17) an den ersten Rauchgas-Luft-Wärmetauscher (5) angeschlossen ist, daß dieser erste Rauchgas-Luft-Wärmetauscher (5) anderseits an die Nutzturbine (19) angeschlossen ist, die wiederum mit der Turbine des Hochdruck-Turboladers (17) in Verbindung steht, und daß der zweite Rauchgas-Luft-Wärmetauscher (4) zwischen den Turbinen der beiden Turbolader (15, 17) geschaltet ist.

7. Anlage nach einem der Ansprüche 1 bis 5, **dadurch gekennzeichnet**, daß ein Niederdruck-Turbolader und ein Hochdruck-Turbolader vorgesehen sind, wobei die beiden Turbolader sowohl auf der Verdichterseite als auch auf der Turbinenseite in Serie geschaltet sind, daß die Verdichterseite des Hochdruck-Turboladers an den ersten Rauchgas-Luft-Wärmetauscher angeschlossen ist, daß dieser erste Rauchgas-Luft-Wärmetauscher anderseits sowohl an die Nutzturbine als auch an die Turbine des Hochdruck-Turboladers angeschlossen ist und daß der zweite Rauchgas-Luft-Wärmetauscher zwischen der Nutzturbine und der Turbine des Hochdruck-Turboladers einerseits und der Turbine des Niederdruck-Turboladers anderseits geschaltet ist.

8. Anlage nach einem der Ansprüche 1 bis 7, **dadurch gekennzeichnet**, daß eine vorzugsweise mit einer steuerbaren Ventilanordnung versehene Leitung für die in der Nutztur bine (19) bzw. in den Turbinen der Turbolader (15, 17) abgekühlte Luft zur Brennkammer (3) vorgesehen ist.

9. Anlage nach einem der Ansprüche 1 bis 8, **dadurch gekennzeichnet**, daß nach dem Rauchgas-Luft-Wärmetauscher (4, 5) ein weiterer Wärmetauscher für das Rauchgas, z.B. ein Rauchgas-Wasser-Wärmetauscher (6', 6") und/oder ein weiterer Rauchgas-Luft-Wärmetauscher (8) vorgesehen ist.

10. Anlage nach Anspruch 9, **dadurch gekennzeichnet**, daß nach dem Rauchgas-Luft-Wärmetauscher (4, 5) ein Wärme-Verschiebungssystem (7) für das Rauchgas vorgesehen ist, das aus zwei in Serie geschalteten Gegenstromwärmetauschern besteht, zwischen denen sich der weitere Wärmetauscher bzw. wenigstens einer der weiteren Wärmetauscher (6"', 8) für das Rauchgas befinden.

11. Anlage nach einem der Ansprüche 1 bis 10, **dadurch gekennzeichnet**, daß zum Verbrennen der Biomasse ein Biomasse-Vergaser (1) mit einem anschließenden Gasbrenner in der Brennkammer (3) vorgesehen ist, wobei zwischen dem Biomasse-Vergaser (1) und dem Gasbrenner ein Staubfilter (2) vorgesehen ist.

## Claims

1. Apparatus for obtaining electrical energy from fuels, in particular from biogenic fuels, with a combustion chamber (3), means for drawing in and compressing air from the environment and an operating turbine (19) with connected generator, wherein the means for drawing in and compressing air comprise at least two series-connected compressors between which are provided a water atomiser (11) and/or a heat exchanger (6) and wherein the compressors each form part of a turbocharger (15, 17), characterised in that the apparatus comprises a first (5) and a second (4) flue gas-air heat exchanger (4, 5) which are in each case spatially separated from the combustion chamber (3), wherein in both flue gas-air heat exchangers (5, 4) the air drawn in by the compressors is heated by the flue gas produced in the combustion chamber (3), in that the operating turbine (19) and the turbines of the turbochargers (15, 17) can be driven by the heated air, in that in the first flue gas-air heat exchanger (5) the direction of flow of the air is opposite the direction of flow of the flue gas, whereas in the second flue gas-air heat exchanger (4) the direction of flow of the air and the direction of flow of the flue gas are the same, in that the first flue gas-air heat exchanger (5), seen in the direction of flow of the air, is located downstream of the second flue gas-air heat exchanger (4), in that the first flue gas-air heat exchanger (5), seen in the direction of flow of the flue gas, is located upstream of the second flue gas-air heat exchanger (4) and in that the second flue gas-air heat exchanger (4) is connected between the turbine of one turbocharger (17, 15) and the industrial turbine (19) or between the turbines of two turbochargers (15, 17).

2. Apparatus according to claim 1, characterised in that between the two compressors are provided both a water atomiser (11) and a heat exchanger (6), wherein the heat exchanger (6) - seen in the direction of flow of the air - is located downstream of the water atomiser (11).

3. Apparatus according to claim 1 or 2, characterised in that upstream of the last compressor as well - seen in the direction of flow of the air - is provided a water atomiser (11') and/or a heat exchanger (6').

4. Apparatus according to any of claims 1 to 3, characterised in that, seen in the direction of flow of the air, downstream of the industrial turbine (19) is provided a duct burner (16), preferably an oil or gas duct burner.

5. Apparatus according to any of claims 1 to 4, characterised in that downstream of the turbine of at least one turbocharger (15, 17) is provided a duct burner (16', 16"), preferably an oil or gas duct burner.

6. Apparatus according to any of claims 1 to 5, characterised in that a low-pressure turbocharger (15) and a high-pressure turbocharger (17) are provided, wherein the two turbochargers (15, 17) are connected in series both on the compressor side and on the turbine side, in that the compressor side of the high-pressure turbocharger (17) is connected to the first flue gas-air heat exchanger (5), in that this first flue gas-air heat exchanger (5) is connected on the other side to the industrial turbine (19) which is in turn connected to the turbine of the high-pressure turbocharger (17), and in that the second flue gas-air heat exchanger (4) is connected between the turbines of the two turbochargers (15, 17).

7. Apparatus according to any of claims 1 to 5, characterised in that a low-pressure turbocharger and a high-pressure turbocharger are provided, wherein the two turbochargers are connected in series both on the compressor side and on the turbine side, in that the compressor side of the high-pressure turbocharger is connected to the first flue gas-air heat exchanger, in that this first flue gas-air heat exchanger is connected on the other side both to the industrial turbine and to the turbine of the high-pressure turbocharger, and in that the second flue gas-air heat exchanger is connected between the industrial turbine and the turbine of the high-pressure turbocharger on the one hand and the turbine of the low-pressure turbocharger on the other hand.

8. Apparatus according to any of claims 1 to 7, characterised in that a pipe, which is preferably provided with a controllable valve assembly, is provided for the air to the combustion chamber (3) which is cooled in the industrial turbine (19) or in the turbines of the turbochargers (15, 17).

9. Apparatus according to any of claims 1 to 8, characterised in that behind the flue gas-air heat exchanger (4, 5) is provided an additional heat exchanger for the flue gas, e.g. a flue gas-water heat exchanger (6', 6") and/or an additional flue gas-air heat exchanger (8).

10. Apparatus according to claim 9, characterised in that upstream of the flue gas-air heat exchanger (4, 5) is provided a heat displacement system (7) for the flue gas, which consists of two series-connected countercurrent heat exchangers between which are located the additional heat exchanger or at least one of the additional heat exchangers (6"', 8) for the flue gas.

11. Apparatus according to any of claims 1 to 10, characterised in that for burning the biomass a biomass gasifier (1) with an adjoining gas burner is provided in the combustion chamber (3), wherein between the biomass gasifier (1) and the gas burner is provided a dust filter (2).

## Revendications

1. Installation de récupération d'énergie électrique à partir de combustibles, en particulier à partir de biocombustibles, comprenant une chambre de combustion (3), des organes d'aspiration et de compression de l'air environnant et une turbine utilisatrice (19) couplée à un générateur, les organes d'aspiration et de compression de l'air présentant au moins deux compresseurs montés en série, entre lesquels sont prévus un pulvérisateur d'eau (11) et/ou un échangeur de chaleur (6), les compresseurs constituant chacun une partie d'un turbocompresseur de suralimentation (15, 17), caractérisée en ce que l'installation comprend un premier (5) et un deuxième (4) échangeurs de chaleur gaz brûlés-air qui sont chacun séparés spatialement, dans les deux échangeurs, l'air aspiré par les compresseurs étant réchauffé par les gaz brûlés créés dans la chambre de combustion (3), en ce que la turbine utilisatrice (19) et les turbines des turbocompresseurs de suralimentation (15, 17) sont susceptibles d'être entraînées par l'air réchauffé, en ce que dans le premier échangeur gaz brûlés-air (5), la direction d'écoulement de l'air est dirigée en sens opposé à la direction d'écoulement des gaz brûlés, tandis que dans le deuxième échangeur de chaleur gaz brûlés-air (4), la direction d'écoulement de l'air et la direction d'écoulement des gaz brûlés sont dirigées dans le même sens, en ce que le premier échangeur de chaleur gaz brûlés-air (5), vu dans la direction d'écoulement de l'air, est disposé devant le deuxième échangeur de chaleur gaz brûlés-air (4), en ce que le premier échangeur de chaleur gaz brûlés-air (5), vu dans la direction d'écoulement des gaz brûlés, et disposé derrière le deuxième échangeur de chaleur gaz brûlés-air (4), et en ce que le deuxième échangeur de chaleur gaz brûlés-air (4) est interposé entre la turbine d'un turbocompresseur de suralimentation (17, 15) et la turbine utilisatrice (19) ou entre les turbines des deux turbocompresseur de suralimentation (15, 17).

2. Installation selon la revendication 1, caractérisée en ce que, entre les deux compresseurs, sont prévus aussi bien un pulvérisateur d'eau (11), qu'également un échangeur de chaleur (6), cet échangeur de chaleur (6) étant placé - vu dans la direction d'écoulement de l'air - devant le pulvérisateur d'eau (11).

3. Installation selon la revendication 1 ou 2, caractérisée en ce qu'elle comporte également - vue dans la direction d'écoulement de l'air - après le dernier compresseur, un pulvérisateur d'eau (11') et/ou un échangeur de chaleur (6').

4. Installation selon l'une des revendication 1 à 3, caractérisée en ce que, vu dans la direction d'écoulement de l'air, est prévu devant la turbine utilisatrice (19) un brûleur-canal (16), de préférence un brûleur-canal à huile ou a gaz.

5. Installation selon l'une des revendications 1 à 4, caractérisée en ce que, avant la turbine d'au moins un turbocompresseur de suralimentation (15, 17), est prévu un brûleur-canal (16'. 16"), de préférence un brûleur-canal à huile ou à gaz.

6. Installation selon l'une des revendications 1 à 5, caractérisée en ce qu'elle comporte un turbocompresseur de suralimentation (15) à pression réduite et un turbocompresseur de suralimentation (17) à pression élevée, les deux turbocompresseurs de suralimentation (15, 17) étant couplés en série aussi bien du côté du compresseur qu'également du côté de la turbine, en ce que le côté compresseur du turbocompresseur de suralimentation à pression élevée (17) est relié au premier échangeur de chaleur gaz brûlés-air (5), en ce que ce premier échangeur de chaleur gaz brûlés-air (5) est relié par ailleurs à turbine utilisatrice (19), qui est en outre reliée à la turbine du turbocompresseur de suralimentation (17) à pression élevée, et en ce que le deuxième échangeur de chaleur gaz brûlés-air (4) est interposé entre les turbines des deux turbocompresseur de suralimentation (15, 17).

7. Installation selon l'une des revendications 1 à 5, caractérisée en ce qu'elle comporte un turbocompresseur de suralimentation à pression réduite et un turbocompresseur de suralimentation à pression élevée, les deux turbocompresseurs de suralimentation étant reliés en série aussi bien du côté des compresseurs qu'également du côté des turbines. en ce que le côté compresseur du turbocompresseur de suralimentation à pression élevée est relié au premier échangeur de chaleur gaz brûlés-air, en cc que ce premier échangeur de chaleur gaz brûlés-air est relié par ailleurs aussi bien à la turbine utilisatrice qu'également à la turbine du turbocompresseur de suralimentation à pression élevée, et en ce que le deuxième échangeur de chaleur gaz brûlés-air est interposé entre la turbine utilisatrice et la turbine du turbocompresseur de suralimentation à pression élevée, d'une part, et la turbine du turbocompresseur de suralimentation à pression réduite, d'autre part.

8. Installation selon l'une des revendications 1 à 7, caractérisée en ce qu'elle comporte une conduite munie de préférence d'un agencement de valve susceptible d'être contrôlé, pour l'air refroidi dans la turbine utilisatrice (19) ou respectivement dans les turbines des turbocompresseurs de suralimentation (15, 17), vers la chambre de combustion (3).

9. Installation selon l'une des revendications 1 à 8, caractérisée en ce qu'elle comporte, après l'échangeur de chaleur gaz brûlés-air (4, 5), un autre échangeur de chaleur pour les gaz brûlés, par exemple un échangeur de chaleur gaz brûlés-eau (6', 6") et/ou un autre échangeur de chaleur gaz brûlés-air (8).

10. Installation selon la revendication 9, caractérisée en ce qu'elle comporte, après l'échangeur de chaleur gaz brûlés-air (4. 5), un système de déplacement de chaleur (7) pour les gaz brûlés, et qui se compose de deux échangeurs de chaleur à contre-courant couplés en série, et entre lesquels se trouve placé l'autre échangeur de chaleur ou au moins l'un des autres échangeurs de chaleur (6"', 8) pour les gaz brûlés.

11. Installation selon l'une des revendications 1 à 10, caractérisée en ce qu'elle comporte, pour la combustion de la biomasse un gazéificateur de biomasse (1) raccordé à un brûleur à gaz dans la chambre de combustion (3), un filtre à poussières (2) étant prévu entre le gazéificateur de biomasse (1) et le brûleur à gaz.
